# EUROPEAN PATENT APPLICATION

(11) **EP 1 804 207 A1**
(43) Date of publication of application: **04.07.2007**
(21) Application number: 06024638.6
(22) Date of filing: 28.11.2006
(51) Int. Cl.: G06Q 10/00

(54) **Template for generating physical-operation objects**

(30) Priority: 30.12.2005 US 323665
(71) Applicant: SAP AG, 69190 Walldorf (DE)
(72) Inventor: Runde, Stefanie, 76327 Pfinztal (DE); Rozenszajn, Sergio, Rehovot 76516 (IL); Yaniv, Amit, Zur Moshe 42810 (IL); Meyer, Robert, 69190 Walldorf (DE); Schmitz, Henning, 69115 Heidelberg (DE); Schmidt , Martin, 69168 Wiesloch (DE); Kull, Irena, Yehud 56202 (IL); Friedrich, Thomas, 69190 Walldorf (DE)
(74) Representative: Müller-Boré & Partner Patentanwälte

(57) **Abstract**

A method to be performed in a computer system in association with initiating a physical operation includes receiving a request in a computer system for a physical operation. The method includes generating a first object to be used in the physical operation, the first object being generated based on the physical operation using a template. The template is configured for generating objects for any of at least (1) a physical operation performed in product manufacturing and (2) a physical operation performed in post-manufacturing product management. The generated first object may be an order object that describes the physical operation and that is to be updated after performance of the physical operation to indicate fulfillment. When the generated first object is an information collection object configured to represent performance of the physical operation, the method may further include initiating the performance of the physical operation using the information collection object.

## Description

### Technical Field

The description relates to use of at least one template for generating objects to be used in physical operations.

### Background

There exists systems for computerized automation of operations and processes in industrial or other commercial enterprises. Examples of such existing systems are those available from SAP AG in Walldorf (Baden) Germany. Some of the existing systems are intended for use with the logistic procedures and operations that are common in manufacturing processes and they are therefore typically used in production plants. Other systems, or components of systems, are intended for use in the logistic management of products that have already been manufactured. They are therefore typically used in warehouses, distribution centers and other facilities where goods may be inspected, repacked and moved to particular storage locations while awaiting shipment.

The distribution of responsibilities and functionality between these two categories of systems is based on the way that these industries have emerged and developed historically. That is, over decades in the past, production plants and similar facilities have carried out their operations according to well-established routines that involve the basic steps of making the product. Improvements in technology have changed the way certain tasks are performed, but the general logistic view of how the core constituents of the manufacturing process is carried out has not changed as significantly. Similarly, warehouses have traditionally been viewed as facilities mainly for logistic management of goods without significant modification and, thus, essentially non-manufacturing in nature.

This view is reflected in the existing systems for controlling manufacturing processes. Such systems may perform similar function within their respective domains, but they rarely share information. The computer model they use for the different components of the process are typically specialized and heavily flavored by the traditional manufacturing view. Systems for warehouse management, in contrast, have other computer models that are targeted toward managing the logistics of storing and eventually delivering goods. A disadvantage of existing systems, then, is that they are designed and configured for only their type of process and lack flexibility in adapting to new demands in the industry and the marketplace that challenge the traditional views.

This shortcoming is accentuated because the respective worlds of manufacturing and warehouse management are beginning to merge so that there may no longer exist a distinct point where one of them ends and the other begins. Also, companies increasingly need to gather more real-time information about their operations for purposes of planning and execution, information that should be used across applications in real time to optimize manufacturing and distribution processes.

### Summary

The invention relates to generating objects for physical operations using a template.

In a first general aspect, a method to be performed in a computer system in association with initiating a physical operation includes receiving a request in a computer system for a physical operation. The method includes generating a first object to be used in the physical operation, the first object being generated based on the physical operation using a template. The template is configured for generating objects for any of at least (1) a physical operation performed in product manufacturing and (2) a physical operation performed in post-manufacturing product management.

Implementations may include any or all of the following features. The generated first object may be an order object that describes the physical operation and that is to be updated after performance of the physical operation to indicate fulfillment. The template may specify a branching node for the order object, the branching node indicating that the physical operation is to be performed in connection with a branch in a process path. When the physical operation is to be performed in the product manufacturing, the template may specify an internal material flow node for the order object, the internal material flow node describing a flow of material in relation to the physical operation. When the generated first object is an information collection object configured to represent performance of the physical operation, the method may further include initiating the performance of the physical operation using the information collection object. The method may further include recording, in the information collection object, data generated in the performance of the physical operation. The method may further include generating at least one task object using the information collection object, the task object corresponding to a predefined task that is a portion of the physical operation. When the physical operation is for product manufacturing, the first object may include a material input node indicating a first material that enters the physical operation, and a material output node indicating a second material that results from the physical operation. When the physical operation is for post-manufacturing product management, the first object may include a material input node and a material output node. The material input node may indicate (A) a source location for a moving operation, (B) a logistics package for a packing operation, or (C) a quantity or stock category for a checking operation, and the material output node may indicate (D) a resulting destination location for a moving operation, (E) a logistics package for a packing operation, or (F) a quantity or stock category for a checking operation. The first object may include at least one operation node corresponding to the physical operation. The operation node may correspond to any of (a) a making type operation, (b) a moving type operation, (c) a packing type operation and (d) a checking type operation. The first object may include at least one activity node associated with the operation node, the activity node representing an activity to be performed in the physical operation. The activity node may represent any of (a) a pre-operation activity, (b) a production activity changing a material, (c) a post-operation activity, (d) an activity of packing at least one material, (e) an activity of unpacking at least one material, (f) an activity of moving at least one material and (g) an activity of checking at least one material. The first object may include at least one step node associated with the activity node, the step node representing a step to be performed in the physical operation. The first object may be a confirmation object configured to be used in confirming performance of the physical operation. The method may further include generating, using another template, an information collection object that is configured to represent the performance of the physical operation. The method may further include recording, in the information collection object, data generated in the performance of the physical operation. When several objects including the first object are to be used in performing the physical operation, the method may further include generating the several objects using separate templates, each of the separate templates being configured for generating product-manufacturing type objects and post-manufacturing product management type objects.

Advantages of implementations may include any or all of the following. Providing a flexible and efficient use of common templates in manufacturing management and warehouse management. Providing operation control that is based on sharing of information. Providing operation control that is based on sharing of master data such as bill of operation, bill of material, packing bill of material, process model, release management of master data, location and bin management, and resource management. Providing operation control that is based on sharing inventory management, execution behavior patter and general services.

The details of one or more embodiments of the invention are set forth in the accompanying drawings and the description below. Other features, objects, and advantages of the invention will be apparent from the description and drawings, and from the claims.

### Brief Description of the Drawings

FIG. 1 is a block diagram showing an environment where templates are used to generate multiple business objects used to initiate physical operations;
FIG. 2 is a block diagram showing the interaction between the site logistics processing component and other components;
FIG. 3 is a block diagram showing the structure of the order and lot business objects;
FIG. 4 is a block diagram showing operations and activities that comprise production order and production lot business objects, along with the process of generating confirmation documents;
FIG. 5 is a block diagram showing operations and activities that comprise site logistics order and site logistics lot business objects, along with the process of generating confirmation documents;
FIG. 6 is a block diagram showing the structure of the logistics confirmation template;
FIG. 7 is a block diagram showing details of process flow branching;
FIG. 8 is a flow chart showing a generic process from request to performance of a physical operation;
FIG. 9 is a block diagram of a general computer system.

Like reference numerals in the various drawings indicate like elements.

### Detailed Description

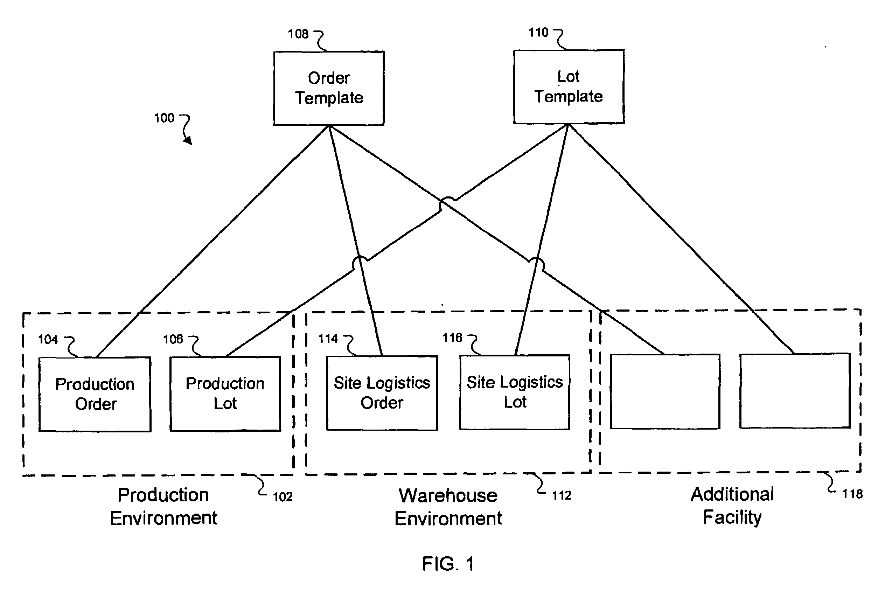

FIG 1 shows an environment 100. The environment 100 may contain computer resources to plan, execute and document physical operations that take place in the environment 100. The environment 100 contains a production environment 102 in which products can be manufactured, for example by assembling components or by transforming a material. There can also be moving or packing operations in the production environment 102. A production order 104 and a production lot 106 are each an object that may be used in a process performed in the production environment 102. The production order 104 describes the production process of the requested material(s) on the execution level. Production flow is modeled using operations and activities that are executed in sequence, in parallel, or as an aggregate of both. In particular, the production order defines which components and resources are required to produce a material. The production lot 106 is used in executing the physical operation(s) specified by the production order 104. The production lot 106 can be initiated upon the release of the production order 104. By using a production lot, actual quantities are aggregated, confirmation documents are created and plan reductions are calculated. The production lot 106 may be considered an information collection object. For example, the information collected using the production lot 106 can be used in updating inventory records and in changing a fulfillment status of the production order 104.

The production order 104 and production lot 106 may consist of data structures used to describe and document certain physical processes. A process can include one or more operations (i.e. make, move, pack, check). Each operation, in turn, can include one or more activities to be carried out. Finally, an activity can consist of one or more steps that are performed in the physical environment.

The processes themselves, along with the data structures used to describe and document them may apply to a variety of other environments. To take advantage of the commonality that may exist among these environments, the environment 100 may incorporate an order template 108 and a lot template 110. The order template 108 and a lot template 110 contain the common data structures used in executing and documenting processes, along with their component operations and activities, that may be used in several environments. A template may be viewed as an abstract entity from which realizable objects can be generated to suit a particular environment. The production order 104 and production lot 106, along with order and lot objects targeted to other environments, may all be generated from the common order template 108 and the common lot template 110.

The environment 100 also contains a warehouse environment 112 that can be used for logistics management of products, for example by moving, storing or packing them according to predefined routines. The warehouse environment uses a site logistics order 114 and a site logistics lot 116. Warehouse type operations are generally referred to as site logistics in these examples, and may directly involve a warehouse facility or distribution center for goods, to name two examples. The site logistics order 114 is an object that is used to describe the plan of the site logistics process down to the execution level. The logistics flow is modeled using operations and activities that are executed in sequence, in parallel or as an aggregate of both. This may include operations of moving, maintaining and packing products, and make-type operations, for example if the warehouse environment 112 is used for light assembly procedures. The site logistics order may also define which resources are required to perform the activities.

The site logistics lot 116 is used to execute site logistics process. It collects all actual data for a site logistics process and documents its progress. The site logistics lot 116 aggregates actual quantities and confirms that documents are created and plan reductions are calculated. The site logistics lot 116 may be considered an information collection object. The site logistics lot 116 forms the basis for a process-oriented genealogy. The order template 108 and the lot template 110 may also be used for to generate the site logistics order 114 and the site logistics lot 116 for the warehouse environment 112. This is to take advantage of the data structure format in the templates used to describe and document common processes.

The order template 108 and lot template 110 may be used to generate order objects and lot objects in a variety of environments. FIG 1 shows an additional facility 118 for which order and lot objects may be generated. This facility may perform processes which also involve making, moving, packing, maintaining or checking products and which therefore have commonality with the processes that make up the production and warehouse environments. Generating order and lot objects for this environment from the order template 108 and the lot template 110 illustrates the extensibility of the template design. Other object templates may also be generated for the production environment 102 and the warehouse environment 112 similarly to how the order template 108 and the lot template 110 are generated.

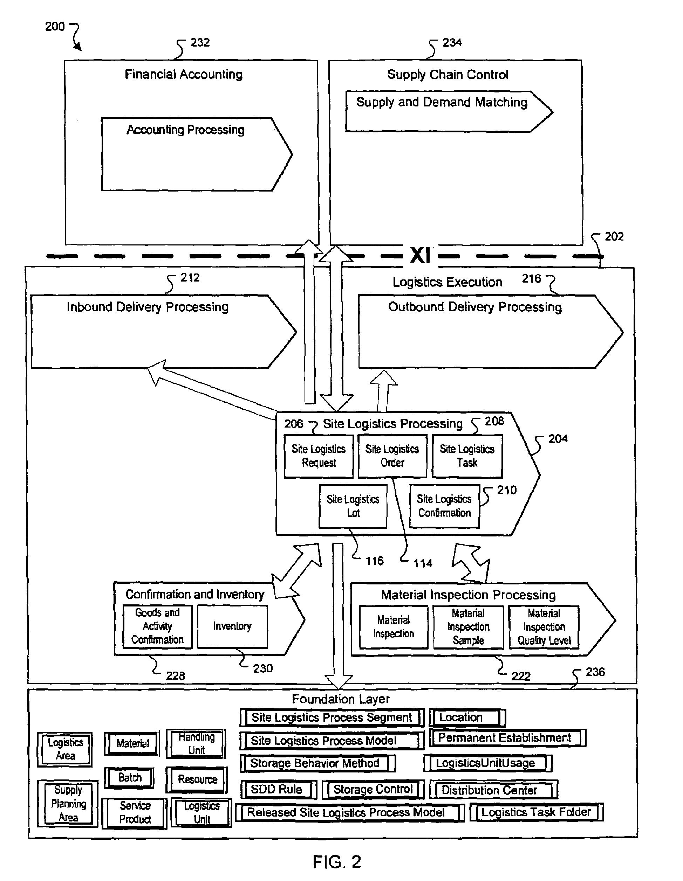

FIG 2 shows a site logistics interaction model 200. The model illustrates how site logistics processing can interact with a variety of processing components. Included in the module is a logistics execution module 202. The logistics execution module 202 is used in planning and executing physical operations in a post-manufacturing scenario, such as in a warehouse.

The logistics execution module 202 contains a site logistics processing component 204 that includes the information relating to the performance of physical operations. The logistics execution module 202 also can be used in executing operations in other facilities, such as in a production plant. The logistics execution module may then be provided with a production processing component having a structure similar to that of the logistics execution module 202. Particularly, such processing components or any of their constituent objects can be generated using templates along the lines of the above description.

Here, the site logistics processing component includes five business objects: a site logistics request 206, the site logistics order 114, the site logistics lot 116, a site logistics task 208 and a site logistics confirmation 210. The site logistics request 206 is a request to perform logistics operations at a certain time that support outbound, inbound and site logistics processes. The site logistics request represents the internal view of execution. It communicates with the requestor, and provides site logistics functionalities, such as site logistics order initiation and site logistics lot creation.

The site logistics task 208 is an object that reflects the organization of work to be performed at a site. The site logistics task divides the site logistics process into self-contained work items. The tasks are to be executed by one or more persons, or by an automation system, involved in the site logistics process. The workers receive all the instructions they need to execute a task via the user interface, and are requested to input actual data. The site logistics confirmation 210 is a document that is used to confirm any changes to physical stock quantities (for example, as a result of goods movements). It includes information about inventory changes, deviations from plan, execution timestamps, and the users and resources involved. The site logistics confirmation updates inventory, finance, and planning.

In implementations where a production processing component is used, it may contain objects that correspond in function to the site logistics request, the site logistics order, the site logistics lot, the site logistics task and the site logistics confirmation.

The site logistics processing component 204 interacts with several other process components as part of site logistics execution. The first of these process components is a supply chain control module 234 which constitutes a request for receiving goods from a vendor or for delivering goods to a customer based on a purchase order or a sales order. The execution of the process is managed by the site logistics processing component 204. During the execution the site logistics processing component interacts with an inbound delivery processing component 212 or an outbound delivery processing component 216, creating an inbound delivery document or an outbound delivery document with the actual relevant logistics data of execution. The inbound delivery processing component enables communication with the vendor and invoicing. The outbound delivery processing component 216 enables communication with the product recipient and billing.

Another processing component that the site logistics processing component 204 interacts with is a material inspection processing component 222. The material inspection processing component 222 is responsible for planning and executing quality inspection documents. The interaction model can be divided into two main parts: the planning phase and the execution phase. In the planning phase, the material inspection processing component 222 determines the necessity for quality inspection for each of the provided products. At that point, all material inspection documents within the material inspection processing component 222 are created. In the execution phase, the site logistics lot 116 is created with the corresponding site logistics task 208. The user who performs the quality inspection test will be able to navigate from the relevant task user interface (UI) to the UI for the material inspection processing. The actual reporting of quality inspection results will be done within the material inspection processing component 222. After finalizing the quality inspection reporting, the process control returns to the site logistics processing component 204. Stock quality decisions that are made within the material inspection processing component 222 will serve as a basis for stock category updates (if required). Stock category updates will be carried out by the site logistics processing component 204. The material inspection processing component 222 contains respective objects for material inspection, material inspection sample and for material inspection quality level.

Another processing component that the site logistics processing component 204 interacts with is a foundation layer 236. The foundation layer includes, among other components, the following business objects: storage behavior method, source and destination determination (SDD) rule and storage control. These business objects are responsible for planning internal operations (e.g. replenishment). They determine whether replenishment is needed, what is the quantity, from which bin to take the stock etc. SDD is a process that searches for the best location for stock retrieval or for stock placement (for example which logistics area). The initial part of the process determines the most appropriate SDD rule according to which a suitable location is found. The rule defines a sequence of locations to search by. After finding the location, the rule identifies the storage behavior method of the location (i.e., a rule node in the storage behavior method business object), which specifies the strategy for retrieval or placement of stock and the constraints that need to be satisfied. Availability of inventory is checked and the answer is provided to the client. Turning now to the storage control business object, it can create the site logistics request 206 to execute an internal process.

The site logistics processing component 204 also interacts with a confirmation and inventory processing component 228. Particularly, the site logistics processing component 204 deals with the execution of processes within the site (e.g., moving, packing, counting etc.), and these stock changes must be updated in the inventory. The site logistics processing component 204 interacts with an inventory object 230 in the confirmation and inventory processing component 228.

The site logistics processing component 204 interacts with a financial accounting module 232, for example to perform accounting processing. The logistics execution module 202 interacts with the supply chain control module 234 to match supply and demand, to respond to inbound and outbound deliveries, and in managing the fulfillment and inventory changes in site logistics processing. These interactions may take place using an integration technology such as the Exchange Infrastructure (XI) available in products from SAP AG in Walldorf (Baden) Germany. The site logistics processing component 204 interacts with the foundation layer 236 that may provide a released site logistics process model, definitions for logistics and supply planning areas, materials and batches, service products and handling units, resources and logistics units. The foundation layer 236 may also provide a Site Logistics Process Segment, a Site Logistics Process Model, a Storage Behavior Method, a Location, a Permanent Establishment, a LogisticsUnitUsage, a Distribution Center, and a Logistics Task Folder.

The above is an example of how the site logistics processing component 204 functions within the logistics execution module 202 and the various interactions it can have. A production processing component can be included in the logistics execution module 202 and can have similar functions and interactions. Particularly, the templates used in generating objects for such and other processing components configure the objects such that the above described interactions can take place.

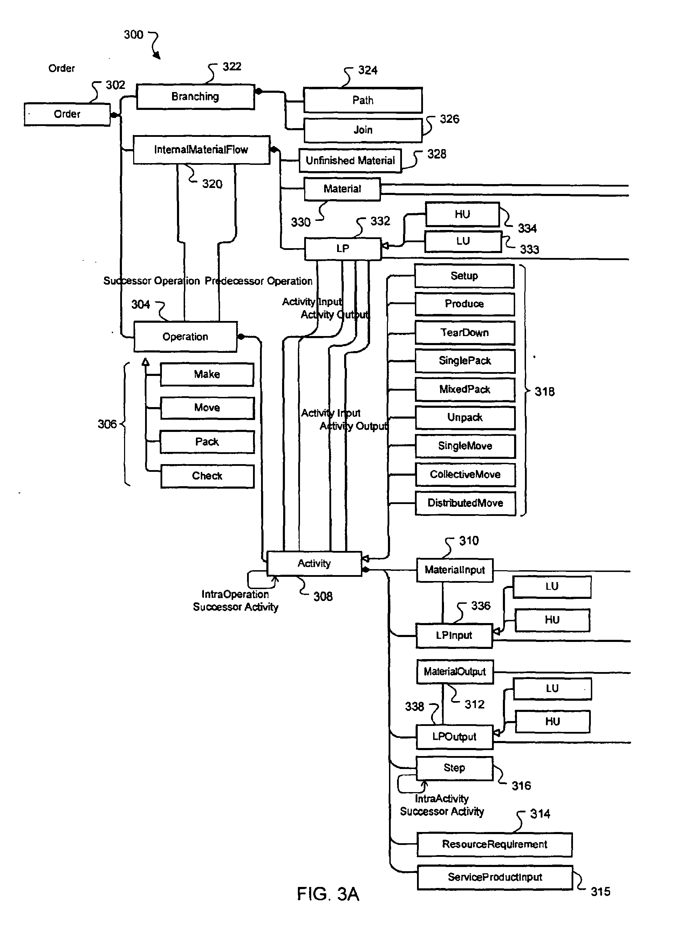

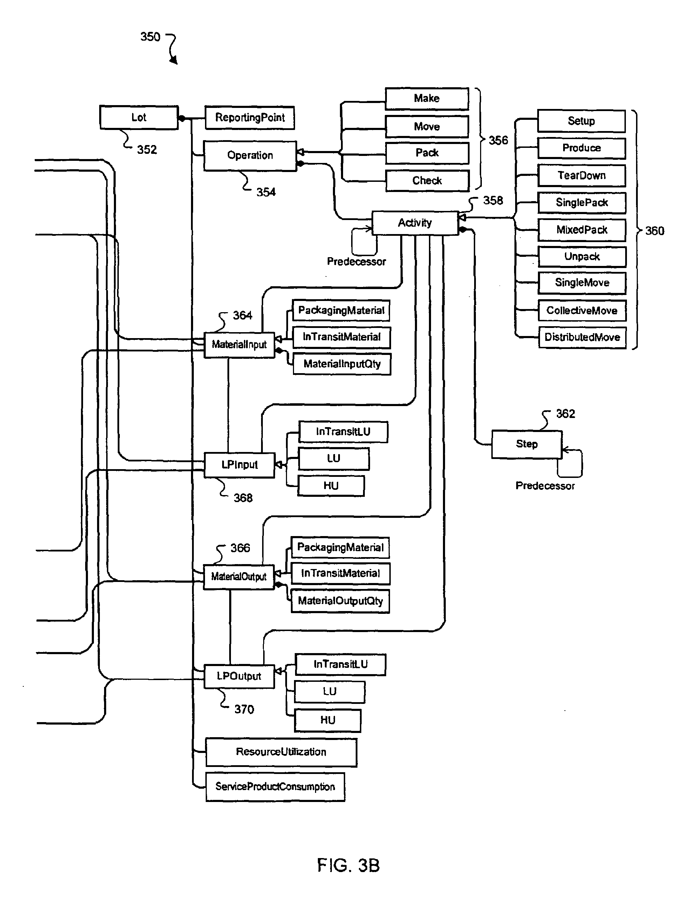

FIG. 3A shows a model of an order object 300 that can be generated from the order template 108. FIG. 3B shows a model of a lot object 350 that can be generated from the lot template 110. The order object 300 includes a header node 302. Associated with the header node is an operation node 304 representing one or more operations that are planned for a resource to perform according to the order. The operations may be of different types, as indicated by operation types 306 associated with the operation node 304. For example, the operation types 306 include making, moving, packing or checking a product.

Each operation node 304 is associated with at least one activity node 308 that represents an activity that is to be performed within the operation. The activity node 308 contains scheduling information for the execution. The activity node 308 may be associated with at least one material input node 310 and at least one material output node 312 representing the material(s) before and after performing the activity, respectively. There can be several material inputs and several material outputs, each of which represents one material that enters, or results from, the activity. For site logistics management the material input node indicates the source location (for moving operation), logistics package (for packing operation), or quantity or stock category (for checking operation). Similarly, the material output node indicates the resulting destination location (for moving operation), logistics package (for packing operation), or quantity or stock category (for checking operation).

The activity node 308 may include a resource requirement node 314 that represents the resource(s) needed for carrying out the activity and may include a service product input node 315 that represents the service product(s) provisioned by the resource(s) needed for carrying out the activity. The activity node 308 may be associated with one or more step nodes 316 that represent a lower level of action undertaken in performing the activity. Activities can be of several different kinds. The activities in the order 300 can be any or all of activity types 318 that include setup activities, producing activities and moving activities, to name a few.

Each of the operation nodes 304 can have an association with a predecessor operation in the process, or a successor operation, or both. This is provided through an internal material flow node 320. That is, an operation in the order is associated with any operation that immediately precedes it, and with any operation that immediately succeeds it.

The order header 302 has a branching node 322 associated with it. This provides that the operations to be executed using the order 300 can branch into more than one path. The branching node 322 is immediately followed by a path node 324 representing a sequence of operations that form a logistics process path within a branch. Such paths can be exclusive, meaning that they are alternative processing paths, only one of which may be processed at a time. The paths may be non-exclusive, meaning that several of them may be processed at a time. The branching node 322 is also associated with a join node 326 representing a point at which the branched logistics process paths again unite. A branch path immediately precedes the join. Here, the internal material flow node can link to any two of the operation, branching or join nodes.

The internal material flow 320 has associated with it at least one of an unfinished material node 328, a material node 330 and a logistic package (LP) node 332. The unfinished material node 328 represents an intermediate state of a product or item for which additional processing is planned. The material node 330 represents the material used in the processing. The LP node 332 represents an item for packaged goods. For example, the LP can be the outcome of a packing operation. Physical units that are handled in the same manner in logistics operations refer to the same LP. The LP can function as a logistics unit (LU) 333 or as a handling unit (HU) 234. Generally, the HU is considered as an identified LU. The activity node 308 has the material input node 310, the material output node 312, an LP input node 336 and an LP output node 338 associated with it, representing the input and output of one or more materials and LPs in performing the activity.

The lot 350, in turn, correlates to the order in several areas. It has a lot header 352 with which is associated one or more operations 354. Particularly, the operations planned in the order 300 will be recorded in the lot 350 upon being executed. The operation node 354 has any of operation types 356. Similarly, the lot contains at least one activity node 358 that can be any of activity types 360. One or more step nodes 362 can be associated with each activity node 358.

The lot 350 includes a material input node 364 correlating to the material input node 310 of the order 300. Similarly, the lot 350 includes a material output node 366 correlating to the material output node 312 of the order 300. Here, the lot 350 also includes an LP input node 368 and an LP output node 370 correlating, respectively, to the LP input node 336 and the LP output node 338 of the order 300.

In execution of the physical operation(s) planned by the order 300, the lot 350 collects the actual data generated for each step of each activity in the operation, and tracks the materials and LUs that are involved in the process. An example of this will now be described.

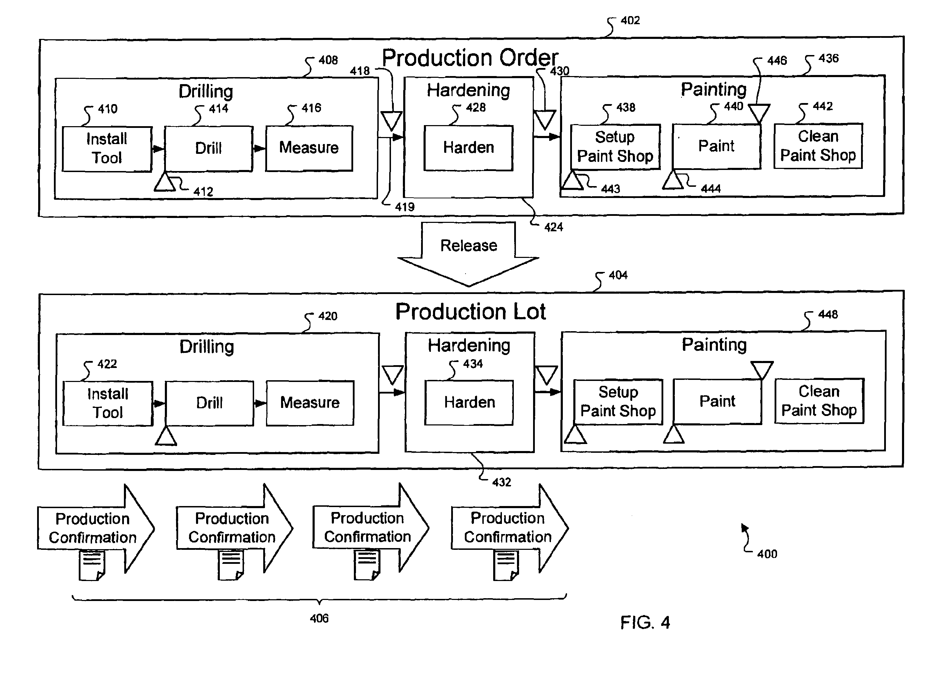

FIG 4 shows an example of a production process 400, which can contain a production order object 402 and a production lot object 404. The production order 402 may be generated from the order template 108. The production lot object 404 is associated with the production order object 402 and may be generated from the lot template 110. The production order 402 dictates the steps of the production process 400 to be performed in the production environment. The production lot 404 collects all actual data during the execution of the production process 400 and documents its progress. The performance of individual activities in the process is confirmed using production confirmation documents 406 that are generated at appropriate stages during the process. The production lot 404 is realized upon release of the production order 402.

The production order 402 is comprised of several operation nodes, a first one of which is a drilling operation 408. The drilling operation 408 includes component activity nodes, the first of which is an install tool activity 410. Once this activity is performed, the drilling operation 408 receives a part to be drilled at a material input node 412. The material input node 412 indicates where the production process dictates the part should be placed for input to the operation. A drill activity 414 is then performed on the part. Following the drill activity 414, the part is subjected to a measure activity 416. The drilling operation 408 completes at an unfinished material node 418. The modeling can include features for specifying byproducts and co-products in addition to the main product. The unfinished material node 418 is associated with an internal material flow 419 that connects the drilling operation 408 with a subsequent hardening operation 424.

Similar to the production order 402, the production lot 404 is comprised of several operation nodes, a first one of which is a drilling operation 420. The drilling operation 420 is broken into component activity nodes, the first of which is an install tool activity 422. The activity nodes, such as the install tool activity 422, store any data gathered during execution of the activity as dictated by the activity nodes in the drilling operation 408 of the production order 402. At appropriate stages during the execution of the production process 400, production confirmation documents 406 are generated detailing results of a particular stage.

Following the drilling operation 408, as dictated by the production order 402, the part enters the hardening operation 424. The part to be hardened is input to the operation via the unfinished material 418. The part is hardened during a harden activity 428 and exits the hardening operation 424 at an unfinished material node 430. A hardening operation 432, contained within the production lot 404, contains a harden activity object 434 which stores data pertinent to the performance of the activity. Confirmation documentation may be triggered when the activity is complete.

The final operation in the production process, as dictated by the production order 402, calls for the part to enter a painting operation 436. The painting operation 436 contains component activities including a setup paint shop activity 438, a paint activity 440 and a clean paint shop activity 442. A material input node 443 indicates an input to the setup activity. Also, a material input 444 indicates an input to the paint activity, e.g., to use red paint. That is, the unfinished material that is to be painted enters via the unfinished material node 430. The internal material flow is modeled via nodes associated with the internal material flow node. A painting operation 448 also exists in the production lot 404 to contain data related to performing the painting operation and to trigger related production confirmation documents 406.

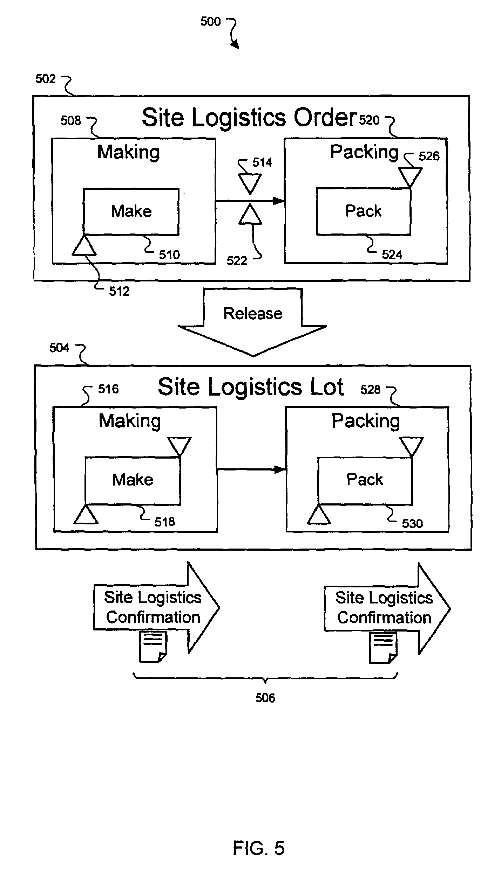

FIG 5 shows an example of a site logistics (warehouse) process 500, which can contain a site logistics order object 502 and a site logistics lot object 504. The site logistics order 502 may be generated from the order template 108. The site logistics lot object 504 is associated with the site logistics order object 502 and may be generated from the lot template 110. The site logistics order 502 dictates the steps of the site logistics process 500 to be performed, for example in the warehouse environment. The site logistics lot 504 collects all actual data during the execution of the site logistics process 500 and documents its progress. The performance of individual activities in the process is confirmed using site logistics confirmation documents 506 that are generated at appropriate stages during the process. The site logistics lot 504 is realized upon release of the site logistics order 502.

The site logistics order 502 is comprised of two operation nodes, a first one of which is a making operation 508. The making operation 508 includes a make activity 510. For example, this includes an assembly operation or a light manufacturing step performed in the warehouse. The make activity 510 receives a material to be manipulated at material input node 512. The make activity 510 is then performed on the input material. The making operation 508 completes at a material output node 514. That is, the site logistics process uses these material nodes in contrast to the production process which uses unfinished material nodes and logistic package nodes.

Similar to the site logistics order 502, the site logistics lot 504 is comprised of two operation nodes, a first one of which is a making operation 516. The making operation 516 includes a make activity 518. The make activity 518 stores any data gathered during execution of the activity as dictated by the activity node in the making operation 508 of the site logistics order 502. At appropriate stages during the execution of the site logistics process 500, site logistics confirmation documents 506 are generated detailing results of a particular stage.

Following the making operation 508, as dictated by the site logistics order 502, the part enters a packing operation 520. The material to be packed is input to the operation at material input 522. This corresponds to the material at the output 514. The part is packed during a pack activity 524 and exits the packing operation 520 at a material output 526. A packing operation 528, contained within the site logistics lot 504, contains a pack activity object 530 which stores data pertinent to the performance of the activity. Confirmation documentation may be triggered when the activity is complete.

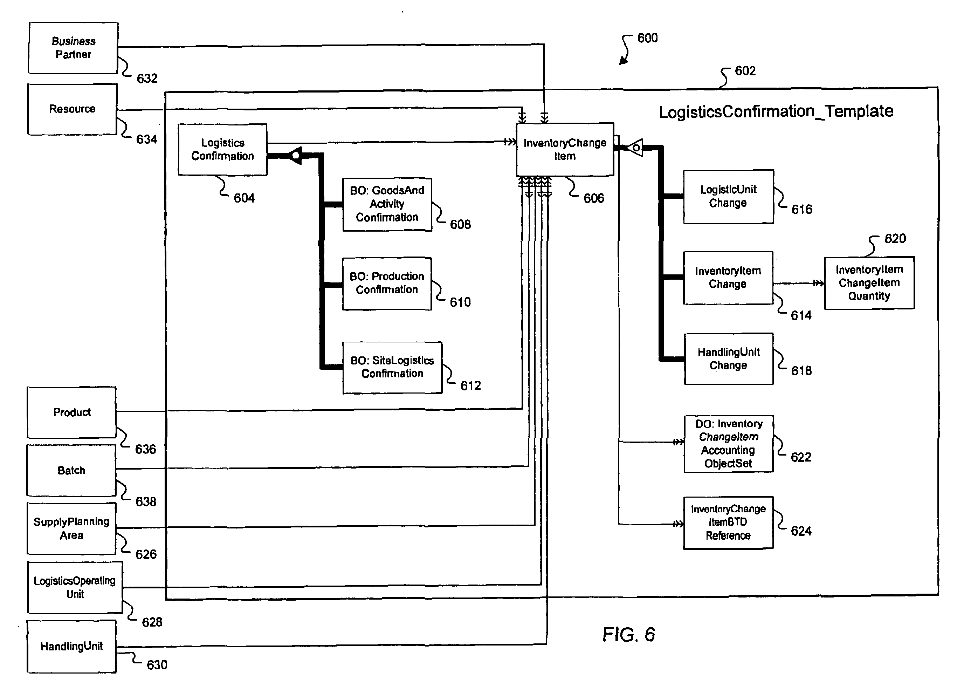

FIG 6 shows an object relationship 600 that includes a logistics confirmation template 602. The logistics confirmation template 602 may be used by the production lot 106 or the site logistics lot 116 to generate confirmation objects relevant to the production environment 102 or the warehouse environment 112 respectively. The logistics confirmation confirms materials, goods and activities that have been completed.

First the logistics confirmation template 602 includes a root node logistics confirmation 604 and a subordinate node inventory change item 606. The logistics confirmation 604 may be configured for use in a variety of logistics environments. Particularly, the logistics confirmation template 602 may be used to generate at least three business objects: a goods and activity confirmation object 608, a production confirmation object 610 and a site logistics confirmation object 612. The production confirmation object 610 may be generated by the production lot 106 to document the execution results of certain physical operations and activities within the production environment. The site logistics confirmation object 612 deals with the execution of processes within the site (e.g., moving, packing, counting etc.) and updates to inventory. The site logistics confirmation object 612 may interact with the inventory object 230 in the confirmation and inventory processing component 228 through actions on the site logistics lot 116.

Second the inventory change item 606 is a node in the logistics confirmation 604 that documents an inventory change. It may occur in three specializations: an inventory item change 614, a logistic unit (LU) change 616 and a handling unit (HU) change 618. A LU is an object that describes the logistics aspects of a product, package or a HU. All three of these nodes provide actions used to make changes in the inventory business object 230. The inventory item change 614 manipulates a quantity or attribute of a material in a storage location. Inventory item change 614 contains a subordinate node: an inventory item change item quantity 620 which is used to change the quantity of a material in a storage location. The LU change 616 is used to change the LU for a given item. The HU change 618 is used to change the HU for a given item.

The inventory change item 606 contains two subordinate nodes: an assignment 622 and a reference 624. The assignment 622 relates to an assignment of an inventory change item to a set of account assignment objects. The reference 624 relates to a reference to a different business document or the business document item relevant to the inventory change item.

Inbound relationships exist between the inventory change item 606 and a variety of business foundation objects. A supply planning area object 626 specifies the planning-relevant area in which the inventory is changed. A logistics operating unit object 628 specifies the LU whose inventory has changed. A handling unit object 630 specifies the HU whose inventory has changed. A business partner object 632 specifies the business partner associated with an inventory change. A resource object 634 specifies the place represented by a resource at which the inventory has changed. A product object 636 specifies the product whose inventory has changed. A batch object 638 specifies the batch whose inventory has changed.

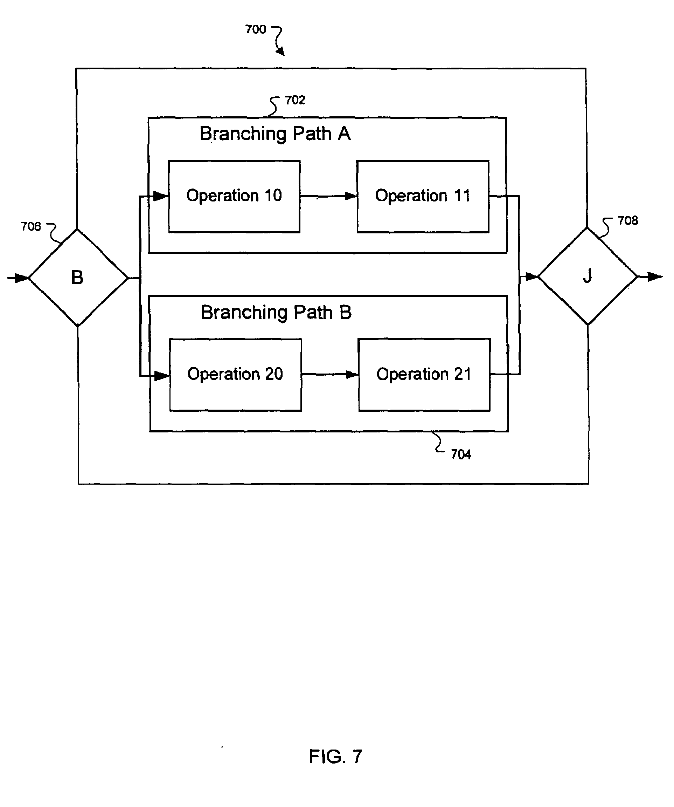

FIG 7 shows a process 700 with branching. Branching relates to alternative processing paths that can be taken in a process. Branching can be used in production type processes and in warehouse type processes, and can be included in a template from which is to be created objects for use in any of these processes. Branches can be classified into two types: non-exclusive branching and exclusive branching. Non-exclusive branching involves alternative processing paths that may be processed simultaneously. Exclusive branching involves alternative processing paths wherein only one of them may be processed at a time.

In this example process 700, a first path 702 and a second path 704 represent alternative process paths that originate in a branch 706. The branch 706 may be exclusive or non-exclusive. Operations are located on each path subsequent to the branch. Path 702 defines operation 10 and operation 11 and path 704 defines operation 20 and operation 21. Following the completion of the operations defined in a particular branch, the process flows through a join node 708 where the process may continue.

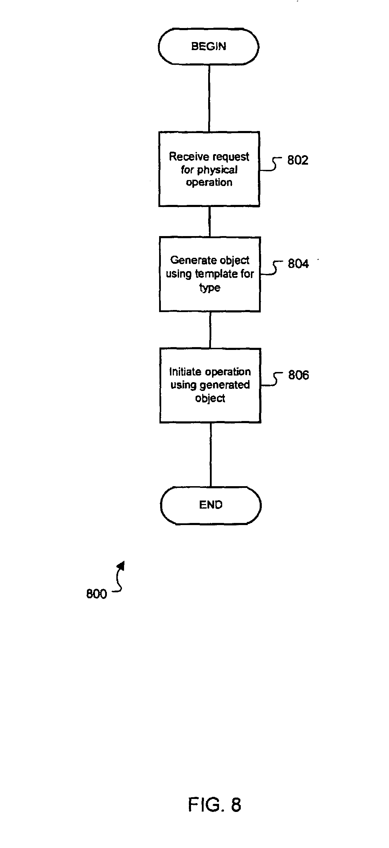

FIG 8 is a flow chart of exemplary operations 800 that can be performed in a computer system in association with initiating a physical operation. The operations 800 can be performed by a processor executing instructions stored in a computer program product. The operations 800 begin in step 802 with receiving a request in a computer system for a physical operation. For example, the site logistics request 206 can be received as a request for a warehouse operation. In step 804, the operations comprise generating a first object to be used in the physical operation. The first object is generated based on the physical operation using a template. The template is configured for generating objects for any of at least (1) a physical operation performed in product manufacturing and (2) a physical operation performed in post-manufacturing product management. For example, the site logistics order 114 can be generated from the order template 108. As another example, the production order 104 can be generated from the order template 108. In optional step 806, the physical operation corresponding to the request can be initiated. For example any of the operations illustrated in FIGS 4 or 5 can be initiated.

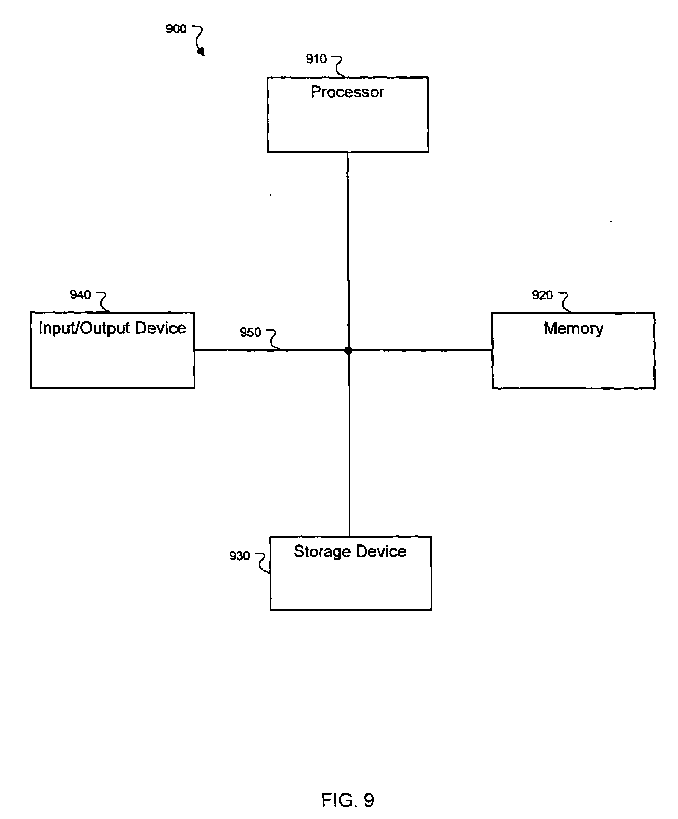

FIG. 9 is a block diagram of a computer system 900 that can be used in the operations described above, according to one embodiment. The system 900 includes a processor 910, a memory 920, a storage device 930, and an input/output device 940. Each of the components 910, 920, 930, and 940 are interconnected using a system bus 950. The processor 910 is capable of processing instructions for execution within the system 900. In one embodiment, the processor 910 is a single-threaded processor. In another embodiment, the processor 910 is a multi-threaded processor. The processor 910 is capable of processing instructions stored in the memory 920 or on the storage device 930 to display graphical information for a user interface on the input/output device 940.

The memory 920 stores information within the system 900. In one embodiment, the memory 920 is a computer-readable medium. In one embodiment, the memory 920 is a volatile memory unit. In another embodiment, the memory 920 is a non-volatile memory unit.

The storage device 930 is capable of providing mass storage for the system 900. In one embodiment, the storage device 930 is a computer-readable medium. In various different embodiments, the storage device 930 may be a floppy disk device, a hard disk device, an optical disk device, or a tape device.

The input/output device 940 provides input/output operations for the system 900. In one embodiment, the input/output device 940 includes a keyboard and/or pointing device. In one embodiment, the input/output device 940 includes a display unit for displaying graphical user interfaces.

The invention can be implemented in digital electronic circuitry, or in computer hardware, firmware, software, or in combinations of them. Apparatus of the invention can be implemented in a computer program product tangibly embodied in an information carrier, e.g., in a machine-readable storage device or in a propagated signal, for execution by a programmable processor; and method steps of the invention can be performed by a programmable processor executing a program of instructions to perform functions of the invention by operating on input data and generating output. The invention can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the invention can be implemented on a computer having a display device such as a CRT (cathode ray tube) or LCD (liquid crystal display) monitor for displaying information to the user and a keyboard and a pointing device such as a mouse or a trackball by which the user can provide input to the computer.

The invention can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, e.g., a LAN, a WAN, and the computers and networks forming the Internet.

The computer system can include clients and servers. A client and server are generally remote from each other and typically interact through a network, such as the described one. The relationship of client and server arises by virtue of computer programs running on the respective computers and having a client-server relationship to each other.

A number of embodiments of the invention have been described. Nevertheless, it will be understood that various modifications may be made without departing from the spirit and scope of the invention. Accordingly, other embodiments are within the scope of the following claims.

## Claims

1. A method to be performed in a computer system in association with initiating a physical operation, the method comprising:
receiving a request in a computer system for a physical operation; and
generating a first object to be used in the physical operation, the first object being generated based on the physical operation using a template that is configured for generating objects for any of at least (1) a physical operation performed in product manufacturing and (2) a physical operation performed in post-manufacturing product management.

2. The method of claim 1, wherein the generated first object is an order object that describes the physical operation and that is to be updated after performance of the physical operation to indicate fulfillment.

3. The method of claim 2, wherein the template specifies a branching node for the order object, the branching node indicating that the physical operation is to be performed in connection with a branch in a process path.

4. The method of claim 2, wherein the physical operation is to be performed in the product manufacturing, and wherein the template specifies a internal material flow node for the order object, the internal material flow relationship node describing a flow of material in relation to the physical operation.

5. The method of claim 1, wherein the generated first object is an information collection object configured to represent performance of the physical operation, the method further comprising initiating the performance of the physical operation using the information collection object.

6. The method of claim 5, further comprising recording, in the information collection object, data generated in the performance of the physical operation.

7. The method of claim 5 or 6, further comprising generating at least one task object using the information collection object, the task object corresponding to a predefined task that is a portion of the physical operation.

8. The method of anyone of claims 1 to 7, wherein the physical operation is for product manufacturing and wherein the first object includes a material input node indicating a first material that enters the physical operation, and further includes a material output node indicating a second material that results from the physical operation.

9. The method of anyone of claims 1 to 7, wherein the physical operation is for post-manufacturing product management and wherein the first object includes a material input node and a material output node.

10. The method of claim 9, wherein the material input node indicates (A) a source location for a moving operation, (B) a logistics package for a packing operation, or (C) a quantity or stock category for a checking operation, and wherein the material output node indicates (D) a resulting destination location for a moving operation, (E) a logistics package for a packing operation, or (F) a quantity or stock category for a checking operation.

11. The method of anyone of claims 1 to 10, wherein the first object includes at least one operation node corresponding to the physical operation.

12. The method of claim 11, wherein the operation node corresponds to any of (a) a making type operation, (b) a moving type operation, (c) a packing type operation and (d) a checking type operation.

13. The method of claim 11 or 12, wherein the first object includes at least one activity node associated with the operation node, the activity node representing an activity to be performed in the physical operation.

14. The method of claim 13, wherein the activity node represents any of (a) a pre-operation activity, (b) a production activity changing a material, (c) a post-operation activity, (d) an activity of packing at least one material, (e) an activity of unpacking at least one material, (f) an activity of moving at least one material and (g) an activity of checking at least one material.

15. The method of claim 13 or 14, wherein the first object comprises at least one step node associated with the activity node, the step node representing a step to be performed in the physical operation.

16. The method of anyone of claims 1 to 15, wherein the first object is a confirmation object configured to be used in confirming performance of the physical operation.

17. The method of claim 16, further comprising generating, using another template, an information collection object that is configured to represent the performance of the physical operation, the method further comprising recording, in the information collection object, data generated in the performance of the physical operation.

18. The method of anyone of claims 1 to 17, wherein several objects including the first object are to be used in performing the physical operation, further comprising generating the several objects using separate templates, each of the separate templates being configured for generating product-manufacturing type objects and post-manufacturing product management type objects.

19. A computer program product tangibly embodied in an information carrier, the computer program product including instructions that, when executed, cause a processor to perform operations comprising:
receiving a request in a computer system for a physical operation; and
generating a first object to be used in the physical operation, the first object being generated based on the physical operation using a template that is configured for generating objects for any of at least (1) a physical operation performed in product manufacturing and (2) a physical operation performed in post-manufacturing product management.
